# EUROPÄISCHE PATENTANMELDUNG

(11) **EP 2 878 218 A1**
(43) Veröffentlichungstag der Anmeldung: **03.06.2015**
(21) Anmeldenummer: 14194289.6
(22) Anmeldetag: 21.11.2014
(51) Int. Cl.: A41D 13/08, A41D 19/00, A41D 19/01

(54) **Schutzüberzug für eine eine Hunderollleine haltende Hand**

(30) Priorität: 29.11.2013 DE 102013224564; 12.06.2014 DE 202014102716 U
(71) Anmelder: Arnold, Gerhard, 65197 Wiesbaden (DE)
(72) Erfinder: Arnold, Gerhard, 65197 Wiesbaden (DE)
(74) Vertreter: Grabovac, Dalibor

(57) **Zusammenfassung**

Die Erfindung betrifft einen Schutzüberzug (1) für eine Hand, die durch eine erste Öffnung (2) in den von dem Schutzüberzug (1) umgrenzten Raum eingeführt werden kann. Der Schutzüberzug (1) zeichnet sich durch eine zweite Öffnung (3) für eine Hunderollleine (4) aus.

## Beschreibung

Die Erfindung betrifft einen Schutzüberzug für eine Hand, mit einer ersten Öffnung, durch die eine Hand in einen von dem Schutzüberzug umgrenzten Raum einführbar ist.

Hunderolleinen sind sehr verbreitet. Sie beinhalten zumeist im Wesentlichen eine Aufwickelspule, von der gegen die Kraft einer Federvorrichtung ein Seil oder ein Band abgerollt werden kann. Außerdem ist zumeist ein Bedienelement, beispielsweise ein Drucktaster, vorhanden, mit dem die Abrollbewegung gebremst oder blockiert werden kann. Darüber hinaus weisen die bekannten Hunderolleinen zumeist einen Handgriff auf, der beispielsweise integraler Bestandteil eines Gehäuses der Hunderolleine sein kann.

Die bekannten Hunderollleinen sind dafür ausgelegt und konstruiert, mit der nackten Hand oder allenfalls mit dünnen Fingerhandschuhen gehalten und bedient zu werden. Eine Bedienung mit dicken Fingerhandschuhen oder gar mit Fäustlingen, wie sie bei kalter Witterung nötig sind, ist zumeist unmöglich oder zumindest schwierig und umständlich.

Aus US 2011/0155076 A1 ist eine sackartige Tasche mit einer ersten Öffnung, durch die eine Hunderollleine eingeführt werden kann, und mit einer zweiten Öffnung zum Einführen der Hand des Benutzer, bekannt. Die sackartige Tasche umschließt die eingeführte Hunderollleine vollständig. Die erste Öffnung wird mit einem Reisverschluss verschlossen, wobei das eigentliche Seil der hunderollleine durch eine kleine Öffnung austritt.

Aus DE 20 2012 011 785 U1 ist ein Schutzhandschuh für Roll-Leinen zum Führen von Tieren bekannt. Der Schutzhandschuh ist im Wesentlichen wie ein Sack ausgebildet, der die gesamte Rollleine vollständig umschließt. Der Schutzhandschuh weist eine große Öffnung auf, durch die die Rollleine in den Schutzhandschuh gesteckt wird und durch die hindurch der Benutzer den Griff der eingesteckten Rollleine halten kann. Darüber hinaus weist der Schutzhandschuh eine kleine Öffnung auf, durch die die Leine verläuft. Der aus dem Stand der Technik bekannte Schutzhandschuh hat den ganz besonderen Nachteil, dass die Leine ganz erheblich am Rand der kleinen Öffnung schleift, wenn sich der Relativabstand des Benutzers und des gehaltenen Tieres verändert und somit die Leine ausgegeben oder eingezogen wird. Auch besteht die Gefahr, dass sich die Leine in der kleinen Öffnung verklemmt. Insbesondere besteht die Gefahr, dass die auslaufende, in der kleinen Öffnung schleifende und/oder klemmende Leine den gesamten Schutzhandschuh von der Rollleine und der Hand des Benutzers abzieht.

Das Problem des Schleifens und des Klemmens wird insbesondere dadurch verstärkt, dass je nach Position des gehaltenen Tieres und je nach Handhaltung des Benutzers auch ein sehr abgewinkelter Verlauf der aus der kleinen Öffnung austretenden Leine auftreten kann. Außerdem weist der aus dem Stand der Technik bekannte Schutzhandschuh den Nachteil auf, dass er sich unkontrolliert relativ zu der eingesteckten Rollleine bewegen kann und sich somit die Rollleine im Inneren verdrehen kann. Der Benutzer, der eine in den Schutzhandschuh eingesteckte Rollleine benutzen möchte, kann daher zunächst nicht erkennen, in welcher Position sich die Rollleine in dem Schutzhandschuh befindet und muss daher nachteiliger Weise zunächst deren Position ertasten, bevor er die Rollleine ergreifen kann.

Dieselben Probleme treten bei der aus US 2011/0155076 A1 bekannten Vorrichtung auf.

Es ist daher die Aufgabe der vorliegenden Erfindung, dieses Problem zu lösen.

Die Aufgabe wird durch einen Schutzüberzug gelöst, der dadurch gekennzeichnet ist, dass der Schutzüberzug eine zweite Öffnung für eine Hunderollleine aufweist.

Die Erfindung befreit den Benutzer aus dem Zwiespalt, eine Hunderollleine bei kalter Witterung mit der nackten Hand halten und bedienen zu müssen oder stattdessen einen Handschuh zu tragen, mit dem das Halten und insbesondere das Bedienen schwierig oder gar unmöglich ist. Vielmehr kann der Benutzer einer Hunderolleine seine Hand in den erfindungsgemäßen Schutzüberzug stecken und eine zumindest teilweise durch die zweite Öffnung eingeführte oder durch die zweite Öffnung ragende Hunderollleine in dem vom Schutzüberzug umgebenden Raum in der gewohnten Weise halten und/oder bedienen. Die in den Schutzüberzug eingesteckte Hand ist hierbei gegen Umwelteinflüsse, insbesondere gegen Kälte, geschützt.

Wie später noch im Detail genauer erläutert ist, kann der Schutzüberzug vorteilhaft derart ausgeführt sein, dass er universell, insbesondere mit Hunderollleinen unterschiedlichen Typs und unterschiedlicher Größe, verwendet werden kann. Insoweit ist es nicht zwingend notwendig, aber möglich, dass der erfindungsgemäße Schutzüberzug in Kombination mit einer Hunderollleine hergestellt wird. Vielmehr ist es erfindungsgemäß und vorteilhaft möglich, den Schutzüberzug derart auszubilden, dass bereits vorhandene Hunderollleinen verwendet und/oder nachgerüstet werden können.

Bei einer besonderen Ausführung ist vorgesehen, dass eine Hunderollleine durch die zweite Öffnung wenigstens teilweise in den vom Schutzüberzug umgrenzten Raum einführbar ist. Der in dem umgrenzten Raum befindliche Teil der Hunderollleine kann dann mit der Hand, die durch die erste Öffnung eingeführt wurde, gegriffen und/oder bedient werden.

Es kann auch vorgesehen sein, dass eine Hunderollleine zunächst durch die erste Öffnung in den von dem Schutzüberzug umgrenzten Raum eingeführt wird und anschließend der Teil der Hunderollleine, der den Auslass für das Seil oder das Band aufweist, durch die zweite Öffnung wieder nach außen geführt wird, so dass dieser Teil aus der Schutzhülle nach außen ragt. Diese Vorgehensweise bietet sich insbesondere an, wenn der Griffteil einer Hunderollleine größere Abmessungen hat, als der dem Griffteil abgewandte Teil mit dem Auslass für das Seil oder das Band.

Bei einer besonderen Ausführung weist der Schutzüberzug eine Befestigungsvorrichtung auf, um eine Hunderollleine in einer Befestigungsstellung an oder in dem Schutzüberzug befestigen zu können. Alternativ oder zusätzlich kann der Schutzüberzug auch derart ausgebildet sein, dass eine Hunderollleine, insbesondere klemmend, in der zweiten Öffnung in einer Befestigungsstellung befestigbar ist. Insbesondere kann eine Befestigungsvorrichtung vorgesehen sein, die genau hierfür ausgebildet ist.

Der Schutzüberzug kann in vorteilhafter Weise derart ausgeführt sein, dass eine Befestigungsstellung für eine Hunderollleine derart durch eine Befestigungsvorrichtung definiert ist, dass ein Teil der Hunderollleine, insbesondere ein Griff- und/oder Bedienteil, in dem von dem Schutzüberzug umgrenzten Raum angeordnet ist, während ein anderer Teil der Hunderollleine, insbesondere der einen Auslass für ein Seil oder ein Band aufweisende Teil, aus dem Schutzüberzug herausragt.

Alternativ oder zusätzlich kann auch vorgesehen sein, dass in der Befestigungsstellung ein Teil eines Gehäuses einer Hunderollleine in dem von dem Schutzüberzug umgrenzten Raum angeordnet ist und ein anderer Teil des Gehäuses aus dem Schutzüberzug herausragt. Insbesondere bei einer Ausführung, bei der eine Befestigungsstellung für eine Hunderollleine derart definiert ist, dass ein Teil einer befestigten Hunderollleine aus dem Schutzüberzug herausragt, während ein anderer Teil in dem vom Schutzüberzug umgrenzten Raum angeordnet ist, kann die Befestigungsvorrichtung vorteilhaft dazu ausgebildet und bestimmt sein, eine Hunderollleine in der zweiten Öffnung zu befestigen. Hierzu kann die Befestigungsvorrichtung insbesondere im Bereich der zweiten Öffnung angeordnet sein.

Vorzugsweise ist die Befestigungsvorrichtung derart ausgebildet, dass eine befestigte Hunderollleine zerstörungsfrei und vorzugsweise werkzeugfrei wieder von dem Schutzüberzug gelöst werden kann.

Die Befestigungsvorrichtung kann Befestigungsmittel, wie beispielsweise Klips-Verbindungsmittel oder Klett- und Flauschband oder wenigstens einen Druckknopf oder wenigstens einen Knopf oder einen Reißverschluss aufweisen.

Alternativ oder zusätzlich kann auch vorgesehen sein, dass die Befestigungsvorrichtung wenigstens ein elastisch verformbares Element aufweist, das während eines Befestigungsvorganges gegen eine Rückstellkraft aus einer Ruhestellung auslenkbar ist und das nach dem Befestigungsvorgang die Hunderollleine mit der Rückstellkraft in einer Befestigungsstellung hält.

Beispielsweise kann die Befestigungsvorrichtung wenigstens ein elastisch verformbares Element aufweisen, das den Rand der zweiten Öffnung bildet oder das den Rand der Öffnung umgibt. Wenn der Öffnungsumfang der zweiten Öffnung kleiner ist, als der Umfang einer Hunderollleine an einer für eine Befestigung vorgesehenen Stelle, kann die Hunderollleine mit Kraft derart in die zweite Öffnung eingeführt werden, dass sich das elastisch verformbare Element weitet und permanent eine Haltekraft auf die Hunderollleine, beispielsweise ein Gehäuse der Hunderollleine, ausgeübt wird. Auf diese Weise ist eine einfache, jedoch sehr universell einsetzbare Befestigungsvorrichtung realisierbar.

Bei einer besonderen Ausführung weist die Befestigungsvorrichtung einen elastischen Rahmen auf, in den eine Hunderollleine klemmend einführbar ist.

Bei einer ganz besonders vorteilhaften Ausführungsform weist die Befestigungsvorrichtung einen Rahmen und wenigstens ein in den von dem Rahmen umgebenen Raum ragendes elastisches Element auf. Das in den von dem Rahmen umgebenen Raum ragende Element kann beispielsweise als elastische Zunge ausgebildet sein. Eine solche Ausführung hat den ganz besonderen Vorteil, dass Hunderollleinen ganz unterschiedlicher Abmessungen sicher und einfach befestigt und gehalten werden können.

Bei einer vorteilhaften Ausführung weist die zweite Öffnung oder die Befestigungsvorrichtung einen formstabilen Rahmen auf. Ein solcher formstabiler Rahmen hat den Vorteil, dass der Schutzüberzug in einer Grundform gehalten ist, die ein einfaches Befestigen der Hunderollleine und/oder ein einfaches Einführen der Hand ermöglicht. Außerdem kann vorteilhaft vorgesehen sein, dass ein solcher formstabiler Rahmen einen zweiten, elastischen Rahmen hält.

Da die meisten Hunderollleinen im Querschnitt viereckig ausgebildet sind, bietet es sich an, dass der formstabile Rahmen und/oder der elastische Rahmen ebenfalls viereckig ausgebildet sind.

Ganz besonders vorteilhaft ist eine Ausführungsform des Schutzüberzugs, bei dem die zweite Öffnung eine Breite im Bereich von 30 mm bis 45 mm, insbesondere im Bereich von 32 mm bis 40 mm, aufweist, während die zweite Öffnung eine Höhe im Bereich von 80 mm bis 120 mm, insbesondere im Bereich von 90 mm bis 110 mm, aufweist. Eine solche Ausführung ist deshalb vorteilhaft, weil die allermeisten der am Markt befindlichen Hunderollleinen mit einer solchen Ausführungsform verwendet werden können.

Ganz insbesondere vorteilhaft kann vorgesehen sein, dass die zweite Öffnung in der Breite im Bereich von 30 mm bis 45 mm, insbesondere im Bereich von 32 mm bis 40 mm, und in der Höhe im Bereich von 80 mm bis 120 mm, insbesondere im Bereich von 90 mm bis 110 mm, verformbar, insbesondere elastisch verformbar, ist. Eine solche Ausführung ist von sich aus flexibel an die allermeisten Hunderollleinen anpassbar und mit diesen verwendbar.

Bei einer besonderen Ausführungsform weist der Schutzüberzug an der Außenseite wenigstens eine Tasche, beispielsweise für Hundekottüten oder für Leckerli, auf.

Die erste Öffnung kann ein Mittel zum vorübergehenden Verkleinern der ersten Öffnung, insbesondere einen Gummizug oder einen Schnurzug, wie man das von einigen Handschuhtypen kennt, aufweisen, um die erste Öffnung, nachdem die Hand eingeführt wurde, um den Unterarm herum zu schließen. Dies beispielsweise um das Eindringen von kalter Luft zu verhindern.

Vorzugsweise ist der Schutzüberzug dazu ausgebildet, den von ihm umgebenen Raum thermisch von der Umgebung zu isolieren.

Der Schutzüberzug kann wenigstens teilweise aus einem flexiblen Gewebe oder einem Gewirke oder aus einem Vliesmaterial oder aus einem Fell hergestellt sein. Auf diese Weise ist erreicht, dass sich der Schutzüberzug flexibel an Bewegungen der Hand anpassen kann und dass der Schutzüberzug zusammengedrückt werden kann, wenn er platzsparend verstaut werden soll. Es ist jedoch auch möglich, den Schutzüberzug aus einem starren Material herzustellen.

Bei einer vorteilhaften Ausführung weist der Schutzüberzug eine Lampe auf. Diese Ausführung hat den Vorteil, dass der Benutzer ohne eine Lampe separat, beispielsweise mit der anderen Hand, halten zu müssen, den Weg oder den geführten Hund beleuchten kann. Insbesondere kann der Benutzer die Hand, die die Hunderollleine hält, in dem Schutzüberzug belassen.

Die Lampe kann in verschiedenen Ausführungsformen ausgebildet sein. Insbesondere kann es sich um eine Taschenlampe und/oder eine LED-Lampe handeln. Es kann auch vorgesehen sein, dass die Lampe in den Schutzüberzug integriert ist. Beispielsweise können einzelne LED-Elemente in die Außenfläche eingelassen sein,

Es ist auch möglich, dass der Schutzüberzug einen Lampenhalter zum, insbesondere nachträglichen, Befestigen einer Lampe, insbesondere einer Stabtaschenlampe, aufweist. Insbesondere kann vorteilhaft vorgesehen sein, dass die Lampe beweglich, insbesondere schwenkbar, an dem Schutzüberzug angebracht ist oder anbringbar ist. Auf diese Weise kann der Benutzer die Lampe in die Richtung ausrichten, in die er leuchten will. Vorzugsweise ist der Lampenhalter derart ausgebildet, dass die Lampe werkzeuglos befestigt werden kann und/oder werkzeuglos wieder von dem Lampenhalter gelöst werden kann.

Bei einer besonderen Ausführung weist der Schutzüberzug an seiner Außenseite wenigstens ein reflektierendes Element auf. Dieses kann beispielsweise als reflektierender Streifen ausgebildet sein. Eine solche Ausführung hat den besonderen Vorteil, dass der Benutzer bei Dunkelheit besser wahrgenommen wird.

Bei einem Hunderollleinensystem mit einer Hunderollleine, an der ein erfindungsgemäßer Schutzüberzug angeordnet ist, kann ein Handwechsel problemlos dadurch realisiert werden, dass der Benutzer das Hunderollleinensystem außen mit seiner freien Hand festhält, so dass die bislang die Hunderollleine innerhalb des Schutzüberzugs haltende Hand aus dem Schutzüberzug gezogen werden kann. Anschließend kann der Benutzer das Hunderollleinensystem an die frei gewordene Hand übergeben und die ursprünglich freie Hand durch die zweite Öffnung in den Schutzüberzug einführen, um dann mit dieser Hand den Griff der Hunderollleine zu ergreifen.

Bei einer besonderen Ausführung weist der Schutzüberzug eine dritte Öffnung auf, durch die in den von dem Schutzüberzug umgrenzten Raum gegriffen werden kann. Eine solche Ausführung hat den besonderen Vorteil, dass die Hunderollleine auch bei einem Handwechsel stets mit wenigstens einer Hand an ihrem Griff gehalten werden kann. Insoweit ist bei einer solchen Ausführung die Gefahr, dass die Hunderollleine dem Benutzer versehentlich entgleitet, deutlich verringert.

Bei einer besonderen Ausführung weist der Schutzüberzug eine dritte Öffnung auf, durch die in den von dem Schutzüberzug umgrenzten Raum gegriffen werden kann, wobei die zweite Öffnung und die dritte Öffnung ausgebildet und derart angeordnet sind, dass ein Benutzer gleichzeitig mit beiden Händen in den von dem Schutzüberzug umgrenzten Raum greifen kann.

Die dritte Öffnung kann einen Verschluss, beispielsweise einen Klettverschluss oder einen Reißverschluss aufweisen, mit dem die dritte Öffnung verschlossen werden kann, wenn sie gerade nicht benötigt wird. Auf diese Weise ist ein unnötiger Wärmeabfluss vermieden.

Bei einer vorteilhaften Ausführung ist der Schutzüberzug schlauchförmig ausgebildet, wobei die erste Öffnung und die zweite an den Schlauchenden angeordnet sind. Insbesondere kann hierbei zusätzlich vorgesehen sein, dass die dritte Öffnung in der Schlauchwandung angeordnet ist.

Besonders vorteilhaft ist ein Hunderollleinensystem, das eine Hunderollleine beinhaltet, an der ein erfindungsgemäßer Schutzüberzug angeordnet ist.

Ein solches Hunderollleinensystem kann vorkonfektioniert hergestellt sein. Dennoch ist es von Vorteil, beispielsweise für Reinigungszwecke, wenn die Hunderollleine zerstörungsfrei und vorzugsweise werkzeugfrei von dem Schutzüberzug gelöst und anschließend wieder befestigt werden kann.

In der Zeichnung ist der Erfindungsgegenstand schematisch dargestellt und wird anhand der Figuren nachfolgend beschrieben, wobei gleiche oder gleich wirkende Elemente zumeist mit denselben Bezugszeichen versehen sind. Dabei zeigen:
- Fig. 1: ein Ausführungsbeispiel eines erfindungsgemäßen Schutzüberzugs mit einer daran befestigten Hunderollleine in einer Prinzipdarstellung, die die Anordnung der Hunderollleine im Inneren des Schutzüberzugs erkennen lässt,
- Fig. 2: den erfindungsgemäßen Schutzüberzug samt einer Hunderollleine in einer Außenansicht,
- Fig. 3: eine Detaildarstellung eines anderen Ausführungsbeispiels,
- Fig. 4: eine Schnittdarstellung durch das in Figur 3 gezeigte Ausführungsbeispiel,
- Fig. 5: ein Ausführungsbeispiel einer Befestigungsvorrichtung eines erfindungsgemäßen Schutzüberzuges,
- Fig. 6: eine Detailansicht durch die in Figur 5 dargestellten Befestigungsvorrichtung,
- Fig. 7: ein anderes Ausführungsbeispiel einer Befestigungsvorrichtung eines erfindungsgemäßen Schutzüberzugs,
- Fig. 8: eine Schnittdarstellung durch die in Figur 7 dargestellte Befestigungsvorrichtung,
- Fig. 9: ein anderes Ausführungsbeispiel einer Befestigungsvorrichtung eines erfindungsgemäßen Schutzüberzugs mit einem Lampenhalter und einer Lampe,
- Fig. 10: eine Schnittdarstellung durch die in Figur 9 dargestellte Befestigungsvorrichtung,
- Fig. 11: ein weiteres Ausführungsbeispiel eines erfindungsgemäßen Schutzüberzugs mit einer daran befestigten Hunderollleine in einer Prinzipdarstellung, die die Anordnung der Hunderollleine im Inneren des Schutzüberzugs erkennen lässt,
- Fig. 12: noch ein weiteres Ausführungsbeispiel eines an einer Hunderollleine befestigbaren Schutzüberzugs mit einer dritten Öffnung,
- Fig. 13: eine andere Darstellung des in Fig. 12 gezeigten, weiteren Ausführungsbeispiels, und
- Fig. 14: eine Schnittdarstellung der dritten Öffnung des in den Fig. 12 und 13 gezeigten, weiteren Ausführungsbeispiels.

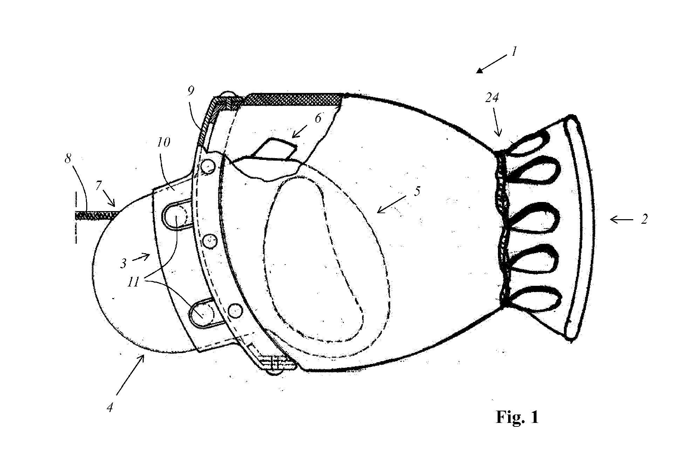

Figur 1 zeigt ein Ausführungsbeispiel eines erfindungsgemäßen Schutzüberzugs 1. Der Schutzüberzug 1 weist eine erste Öffnung 2 auf, durch die eine Hand in den von dem Schutzüberzug 1 umgrenzten Raum einführbar ist. Der Schutzüberzug 1 weist außerdem eine zweite Öffnung 3 für eine Hunderollleine 4 auf.

Bei dem dargestellten Ausführungsbeispiel ist vorgesehen, dass die Hunderollleine 4 in einer Befestigungsstellung mit dem Schutzüberzug verbunden wird, in der ein Griffteil 5 und ein Bedienteil 6 der Hunderollleine 4 in dem von dem Schutzüberzug 1 umgrenzten Raum angeordnet sind, während der Teil der Hunderollleine 4, der einen Auslass 7 für das Seil 8 aufweist, durch die zweite Öffnung 3 hindurch aus dem Schutzüberzug 1 herausragt.

Der Schutzüberzug 1 weist einen formstabilen Rahmen 9 auf, der einen elastischen Rahmen 10 trägt und der die zweite Öffnung 3 umgibt.

Die Hunderollleine 4 kann, vorzugsweise durch die erste Öffnung 2, zunächst in den von dem Schutzüberzug umgrenzten Raum eingeführt und anschließend durch die Öffnung 3 gesteckt werden, bis sie festklemmt. Bereits hierdurch kann eine ausreichende Fixierung realisiert werden. Zusätzlich können Befestigungsmittel 11, wie beispielsweise Druckknöpfe, Knöpfe oder Klipse, oder ein Reißverschluss, vorgesehen sein.

Die in den von dem Schutzüberzug 1 umgrenzten Raum eingeführte Hand kann das Griffteil 5 in gewohnter Weise halten und das Bedienteil 6, nämlich einen Druckknopf zum Blockieren der Abrollbewegung, bedienen. Dennoch ist die Hand hierbei durch den Schutzüberzug insbesondere gegen Kälte geschützt. Der Schutzüberzug kann im Bereich der ersten Öffnung 2 einen Gummizug 24 aufweisen, der gewährleistet, dass der Schutzüberzug eng am Unterarm anliegt und keine Kälte eindringen kann.

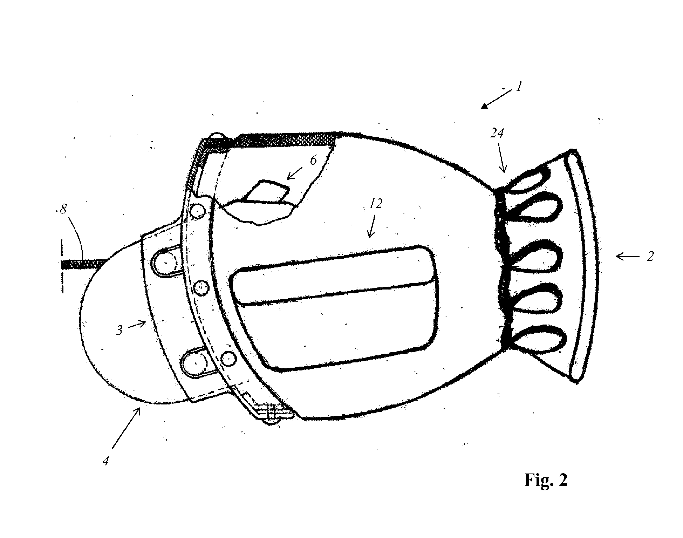

Figur 2 zeigt das in Figur 1 dargestellte Ausführungsbeispiel des erfindungsgemäßen Schutzüberzugs 1 in einer Außenansicht. Auf der Außenseite weist der Schutzüberzug 1 eine Tasche 12, beispielsweise für Hundekotbeutel oder Leckerli, auf.

Der Schutzüberzug 1 ist, abgesehen von dem formstabilen Rahmen 9, aus einem flexiblen Gewebe oder einem Gewirke oder aus einem Vliesmaterial oder aus einem Fell hergestellt.

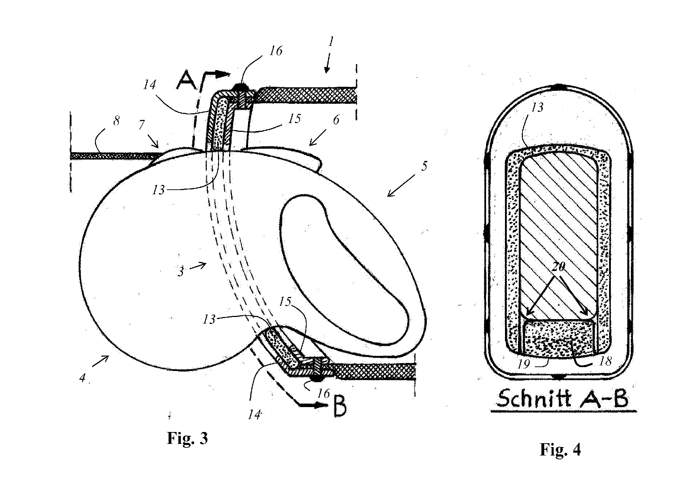

Figur 3 zeigt eine Detailansicht eines weiteren Ausführungsbeispiels eines erfindungsgemäßen Schutzüberzugs 1. Bei diesem Ausführungsbeispiel ist die zweite Öffnung 3, durch die die Hunderollleine 4 gesteckt ist, von einem flexiblen, elastischen Rahmen 13 umgeben, der zwischen einem äußeren, formstabilen Rahmen 14 und einem inneren formstabilen Rahmen 15 eingeklemmt und gehalten ist. Die formstabilen Rahmen 14, 15 sind mittels Nieten 16 mit einem flexiblen Hüllenmaterial 17, wie einem Vliesmaterial oder einem Fell oder einem Gewebe, verbunden.

Auch bei diesem Ausführungsbeispiel ist vorgesehen, dass ein Griffteil 5 und ein Bedienteil 6 in dem von dem Schutzüberzug 1 umgrenzten Raum angeordnet werden, während der Teil der Hunderollleine 4, der einen Auslass 7 für ein Seil oder ein Band 8 aufweist, aus der Öffnung 3 herausragt.

Figur 4 zeigt eine Schnittdarstellung durch das in Figur 3 dargestellte Ausführungsbeispiel. Der flexible, elastische Rahmen 13, der Teil einer Befestigungsvorrichtung zum Befestigen der Hunderollleine 4 ist, umgibt die Öffnung 3. Außerdem ragt in den von dem flexiblen, elastischen Rahmen 13 umgebenen Raum eine elastische Zunge 18, die lediglich an einer Stirnseite 19 mit dem flexiblen, elastischen Rahmen 13 verbunden ist, während die Zunge seitlich durch Schlitze 20 von dem flexiblen, elastischen Rahmen 13 getrennt ist. Diese Ausführung ermöglicht es, Hunderollleinen 4 mit ganz unterschiedlicher Höhe zu befestigen. Wenn eine Hunderollleine geringerer Höhe in die Öffnung 3 eingesteckt wird, verbleibt die Zunge 18 weitgehend in ihrer von dem Rahmen umgebenen Ausgangsstellung. Wird eine Hunderollleine 4 mit einer größeren Höhe eingeführt, klappt die Zunge in größerem Maße aus der zweiten Öffnung 3 heraus, wobei sie eine Klemmkraft auf die Hunderollleine 4 ausübt und diese in der Öffnung 3 hält.

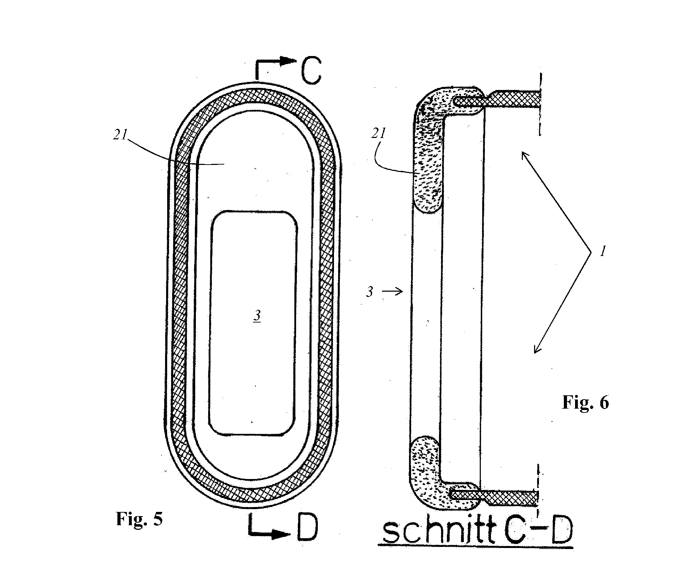

Figur 5 zeigt eine Detailansicht einer möglichen Befestigungsvorrichtung, die dazu dient, eine Hunderollleine in einer zweiten Öffnung 3 zu halten. Die zweite Öffnung 3 ist als Durchbruch in einer elastischen Matte 21 gebildet, die fest mit dem übrigen Schutzüberzug 1 verbunden, beispielsweise verklebt, ist.

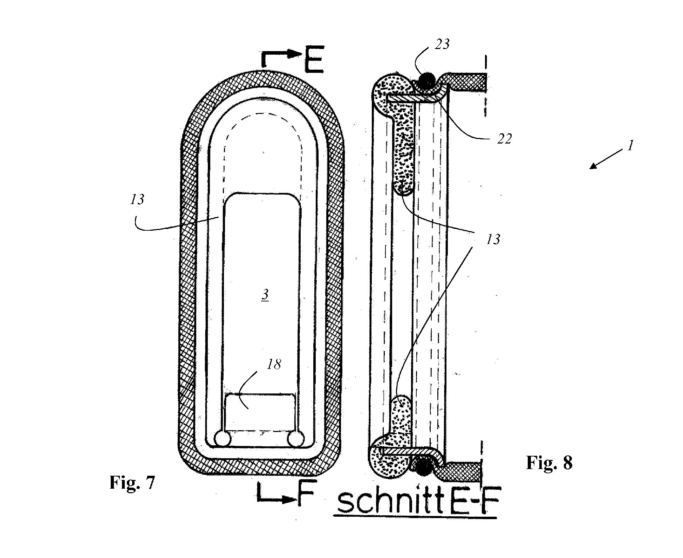

Die Figuren 7 und 8 zeigen eine Detailansicht eines anderen Ausführungsbeispiels eines erfindungsgemäßen Schutzüberzuges, nämlich eine Detailansicht einer Befestigungsvorrichtung zum Befestigen einer Hunderollleine 4 in einer Öffnung 3. Die Öffnung 3 ist bei diesem Ausführungsbeispiel von einem flexiblen, elastischen Rahmen 13 umgeben, in den eine elastische Zunge 18 hineinragt. Der flexible, elastische Rahmen ist mit dem übrigen Schutzüberzug 1, beispielsweise einem Gewebe oder einem Gewirke oder einem Vliesmaterial oder einem Fell, über ein flexibles Zwischenmaterial 22 verbunden. Zusätzlich ist ein elastischer Ring 23, beispielweise ein Gummiring, vorhanden, der das elastische Zwischenmaterial 22 umgibt und bestrebt ist, die Öffnung 3 zu verkleinern und den Rand der Öffnung 3 an eine eingesteckte Hunderollleine 4 (in den Figuren 7 und 8 nicht dargestellt) anzulegen.

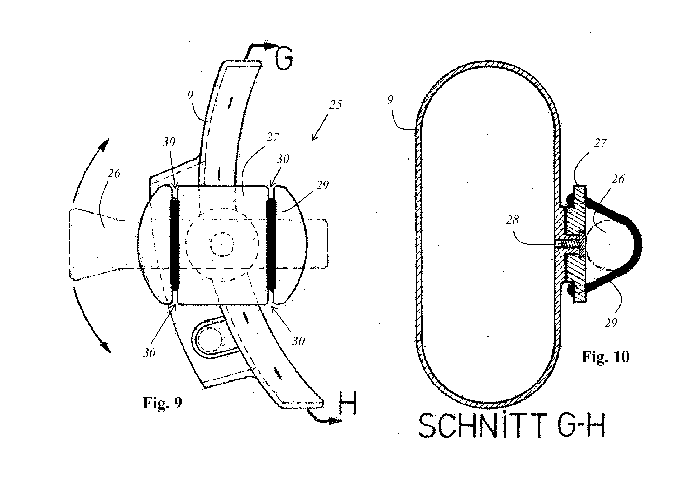

Die Figuren 9 und 10 zeigen ein anderes Ausführungsbeispiel einer Befestigungsvorrichtung eines erfindungsgemäßen Schutzüberzugs mit einem formstabilen Rahmen 9, an dem mit einem Lampenhalter 25 eine Lampe 26, nämlich eine Stabtaschenlampe, gehalten ist. Der Lampenhalter 25 weist eine Grundplatte 27 auf, die mittels einer Schraube 28 an den Rahmen 9 angeschraubt ist. Die Grundplatte weist Nuten 30 auf, durch die ein Gummiband 29 zum Halten der Lampe 26 geführt ist. Der Lampenhalter 25 kann samt der Lampe um die Mittelachse der Schraube 28 geschwenkt werden, was in Figur 9 durch die geschwungenen Pfeile illustriert ist. Bei einer vorteilhaften Ausführung könnte auch ein Befestigungselement für einen Lampenhalter und/oder für eine Lampe in einen als Spritzgußteil ausgebildeten Rahmen eingespritzt sein.

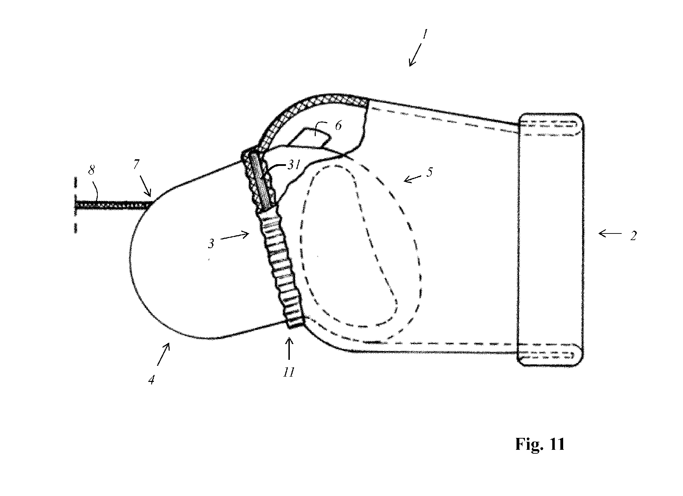

Fig. 11 zeigt ein weiteres Ausführungsbeispiel eines erfindungsgemäßen Schutzüberzugs 1 mit einer daran befestigten Hunderollleine 4 in einer Prinzipdarstellung, die die Anordnung der Hunderollleine im Inneren des Schutzüberzugs erkennen lässt.

Der Schutzüberzug 1 weist eine erste Öffnung 2 auf, durch die eine Hand in den von dem Schutzüberzug 1 umgrenzten Raum einführbar ist. Die erste Öffnung 2 ist bei diesem Beispiel von einem umgeschlagenen Rand 32 eines Endes des Schutzüberzugs 1 umgeben. Vorzugsweise kann der Benutzer entscheiden, wie weit er den Schutzüberzug 1 im Bereich der ersten Öffnung 2 umschlagen will, um die Länge des Schutzüberzug 1 an die aktuellen Erfordernisse anzupassen.

Der Schutzüberzug 1 weist außerdem eine zweite Öffnung 3 für eine Hunderollleine 4 auf. Auch bei diesem Ausführungsbeispiel ist die Hunderollleine 4 in einer Befestigungsstellung mit dem Schutzüberzug 1 derart verkoppelt, dass ein Griffteil 5 und ein Bedienteil 6 der Hunderollleine 4 in dem von dem Schutzüberzug 1 umgrenzten Raum angeordnet sind, während der Teil der Hunderollleine 4, der einen Auslass 7 für das Seil 8 aufweist, durch die zweite Öffnung 3 hindurch aus dem Schutzüberzug 1 herausragt.

Der Schutzüberzug 1 weist einen Kanal auf, der die zweite Öffnung 3 umgibt. Der Schutzüberzug 1 weist außerdem ein Befestigungsmittel 11, nämlich ein in dem Kanal angeordnetes Elastikband 31 auf, das beim Durchstecken der Hunderollleine 4 durch die zweite Öffnung 3 gedehnt wird und das den Schutzüberzug 1 an der Hunderollleine 4 hält. Das Elastikband 31 bildet vorzugsweise einen geschlossenen Ring und kann beispielsweise als Gummiband ausgebildet sein.

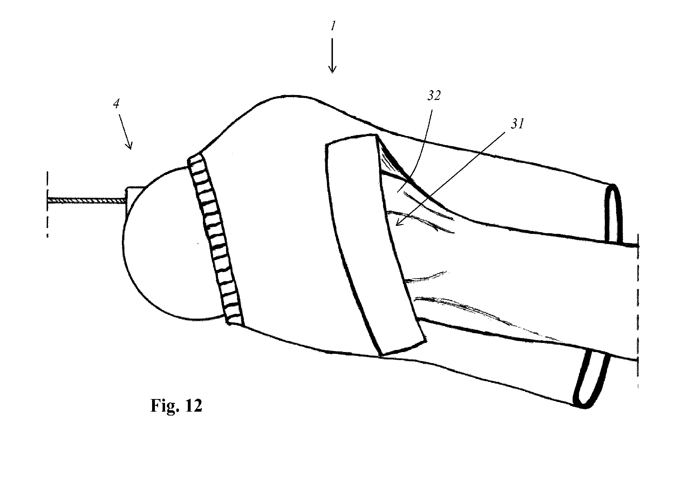

Fig. 12 zeigt noch ein weiteres Ausführungsbeispiel eines an einer Hunderollleine4 befestigbaren Schutzüberzugs 1. Der Schutzüberzug 1 weist eine dritte Öffnung 31 auf, durch der Benutzer, der die Hunderollleine 4 mit einer Hand in dem von dem Schutzüberzug 1 umgrenzten Raum an ihrem Griff festhält (nicht eingezeichnet), zusätzlich mit seiner freien Hand 32 die in den von dem Schutzüberzug 1 umgrenzten Raum greifen kann. Eine solche Ausführung hat den besonderen Vorteil, dass die Hunderollleine auch bei einem Handwechsel stets mit wenigstens einer Hand an ihrem Griff gehalten werden kann.

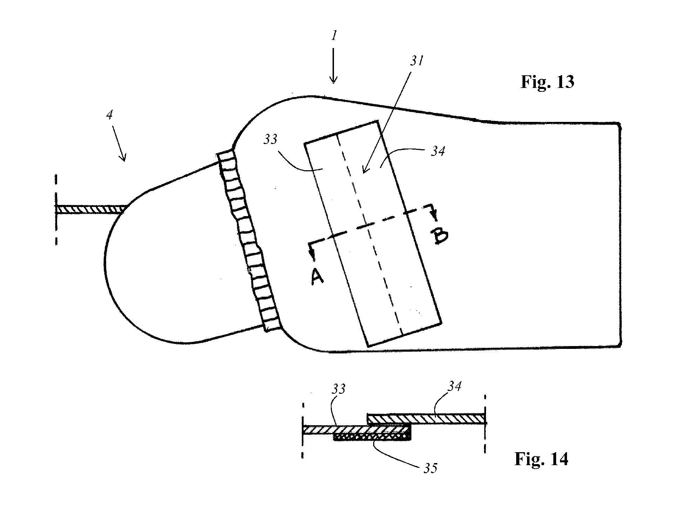

Fig. 13 zeigt den in Fig. 12 bereits dargestellten Schutzüberzug 1 ohne die freie Hand 32 des Benutzers. Die Dritte Öffnung 31 ist, was in Schnittdarstellung der Figur 14 besonders gut zu erkennen ist, von zwei zueinander parallel angeordneten Randelementen 33, 34, nämlich einem ersten Randelement 33 und einem zweiten Randelement 34, umgeben. Die Randelemente können vorteilhaft elastisch und/oder in der Weise ausgebildet sein, dass sie die Öffnung, insbesondere automatisch, verschließen, sobald der Benutzer die Hand aus der dritten Öffnung 31 zieht. Das erste Randelement 33 ist mit einer Verstärkung 35 versehen, die dafür sorgt, dass das erste Randelement 33 stets an dem zweiten Randelement 34 anliegt, wenn der Benutzer die Hand aus der dritten Öffnung 31 gezogen hat. Alternativ oder zusätzlich kann auch ein Verschluss, wie beispielsweise ein Klettverschluss oder ein Reißverschluss zum Verschließen der dritten Öffnung 31 vorhanden sein.

### Bezugszeichenliste:

- 1: Schutzüberzug
- 2: erste Öffnung
- 3: zweite Öffnung
- 4: Hunderollleine
- 5: Griffteil
- 6: Bedienteil
- 7: Auslass
- 8: Seil oder Band
- 9: formstabiler Rahmen
- 10: flexibler Rahmen
- 11: Befestigungsmittel
- 12: Tasche
- 13: flexibler, elastischer Rahmen
- 14: äußerer formstabiler Rahmen
- 15: innerer formstabiler Rahmen
- 16: Niet
- 17: Hüllenmaterial
- 18: Zunge
- 19: Stirnseite
- 20: Schlitze
- 21: elastische Matte
- 22: Zwischenmaterial
- 23: elastischer Ring
- 24: Gummizug
- 25: Lampenhalter
- 26: Lampe
- 27: Grundplatte
- 28: Schraube
- 29: Gummiband
- 30: Nuten
- 31: dritte Öffnung
- 32: freie Hand des Benutzers
- 33: erstes Randelement
- 34: zweites Randelement
- 35: Verstärkung

## Patentansprüche

1. Schutzüberzug für eine Hand, mit einer ersten Öffnung, durch die eine Hand in einen von dem Schutzüberzug umgrenzten Raum einführbar ist, **dadurch gekennzeichnet, dass** der Schutzüberzug eine zweite Öffnung für eine Hunderollleine aufweist.

2. Schutzüberzug nach Anspruch 1, **dadurch gekennzeichnet, dass**
a. eine Hunderollleine durch die zweite Öffnung wenigstens teilweise in den von dem Schutzüberzug umgrenzten Raum einführbar ist, und/oder dass
b. eine Hunderollleine zunächst durch die erste Öffnung in den von dem Schutzüberzug umgrenzten Raum einführbar ist und anschließend ein Teil der Hunderollleine durch die zweite Öffnung nach außen ausführbar ist.

3. Schutzüberzug nach Anspruch 1 oder 2, **dadurch gekennzeichnet, dass**
a. eine Hunderolleine in der zweiten Öffnung in einer Befestigungsstellung mittels einer Befestigungsvorrichtung befestigbar ist und/oder dass
b. eine Befestigungsvorrichtung zum Befestigen einer Hunderolleine in einer Befestigungsstellung vorhanden ist und/oder dass
c. eine Hunderollleine, insbesondere klemmend, in der zweiten Öffnung in einer Befestigungsstellung befestigbar ist.

4. Schutzüberzug nach Anspruch 3, **dadurch gekennzeichnet, dass**
a. in der Befestigungsstellung ein Teil der Hunderollleine in dem von dem Schutzüberzug umgrenzten Raum angeordnet ist und ein anderer Teil der Hunderollleine aus dem Schutzüberzug herausragt und/oder dass
b. in der Befestigungsstellung ein Griff und/oder ein Bedienteil der Hunderollleine in dem von dem Schutzüberzug umgrenzten Raum angeordnet ist und ein anderer Teil der Hunderollleine aus dem Schutzüberzug herausragt, und/oder dass
c. in der Befestigungsstellung ein Teil eines Gehäuses einer Hunderollleine in dem von dem Schutzüberzug umgrenzten Raum angeordnet ist, während ein anderer Teil des Gehäuses aus dem Schutzüberzug herausragt.

5. Schutzüberzug nach Anspruch 3 oder 4, **dadurch gekennzeichnet, dass**
a. die Befestigungsvorrichtung dazu ausgebildet und bestimmt ist, eine Hunderollleine in der zweiten Öffnung zu befestigen und/oder dass
b. die Befestigungsvorrichtung derart ausgebildet ist, dass eine befestigte Hunderolleine zerstörungsfrei und vorzugsweise werkzeugfrei wieder von dem Schutzüberzug lösbar ist, und/oder dass
c. die Befestigungsvorrichtung Befestigungsmittel, insbesondere Klipsverbindungsmittel oder Klettband oder wenigstens einen Druckknopf oder wenigstens einen Knopf oder einen Reißverschluss, aufweist.
d. die Befestigungsvorrichtung wenigstens ein elastisch verformbares Element aufweist, das während eines Befestigungsvorganges gegen eine Rückstellkraft aus einer Ruhestellung auslenkbar ist und das nach dem Befestigungsvorgang die Hunderolleine mit der Rückstellkraft in einer Befestigungsstellung hält, und/oder dass
e. die Befestigungsvorrichtung wenigstens ein elastisch verformbares Element aufweist, das den Rand der zweiten Öffnung bildet oder das den Rand der Öffnung umgibt, und/oder dass
f. die Befestigungsvorrichtung einen elastischen Rahmen aufweist, in den eine Hunderollleine klemmend einführbar ist und/oder dass
g. die Befestigungsvorrichtung einen Rahmen und wenigstens ein, in den von dem Rahmen umgebenen Raum ragendes elastisches Element, insbesondere eine elastische Zunge, aufweist.

6. Schutzüberzug nach einem der Ansprüche 1 bis 5, **dadurch gekennzeichnet, dass**
a. die zweite Öffnung oder die Befestigungsvorrichtung einen formstabilen Rahmen aufweist, und/oder dass
b. die zweite Öffnung oder die Befestigungsvorrichtung einen viereckigen Rahmen aufweist und/oder dass
c. die zweite Öffnung oder die Befestigungsvorrichtung einen formstabilen Rahmen aufweist, der einen elastischen Rahmen hält.

7. Schutzüberzug nach Anspruch 6, **dadurch gekennzeichnet, dass** der Schutzüberzug zur thermischen Isolierung des von ihm umgebenen Raumes ausgebildet ist und/oder dass der Schutzüberzug wenigstens teilweise aus einem Gewebe oder einem Gewirke oder aus einem Vliesmaterial oder aus einem Fell hergestellt ist.

8. Schutzüberzug nach einem der Ansprüche 1 bis 7, **dadurch gekennzeichnet, dass**
a. die zweite Öffnung eine Breite im Bereich von 30 mm bis 45 mm, insbesondere im Bereich von 32 mm bis 40 mm, und eine Höhe im Bereich von 80 mm bis 120 mm, insbesondere im Bereich von 90 mm bis 110 mm, aufweist, und/oder dass
b. die zweite Öffnung in der Breite im Bereich von 30 mm bis 45 mm, insbesondere im Bereich von 32 mm bis 40 mm, und in der Höhe im Bereich von 80 mm bis 120 mm, insbesondere im Bereich von 90 mm bis 110 mm, verformbar, insbesondere elastisch verformbar, ist.

9. Schutzüberzug nach einem der Ansprüche 1 bis 8, **dadurch gekennzeichnet, dass**
a. an der Außenseite des Schutzüberzuges wenigstens eine Tasche angeordnet ist und/oder dass
b. ein Mittel zum vorübergehenden Verkleinern der ersten Öffnung, insbesondere ein Gummizug oder ein Schnurzug, vorhanden ist.

10. Schutzüberzug nach einem der Ansprüche 1 bis 9, **dadurch gekennzeichnet, dass**
a. der Schutzüberzug eine Lampe aufweist und/oder dass
b. der Schutzüberzug einen Lampenhalter zum Befestigen einer Lampe aufweist, und/oder dass
c. der Schutzüberzug an seiner Außenseite wenigstens ein reflektierendes Element, insbesondere wenigstens einen reflektierenden Streifen, aufweist.

11. Schutzüberzug nach einem der Ansprüche 1 bis 10, **dadurch gekennzeichnet dass**
a. der Schutzüberzug eine dritte Öffnung aufweist, durch die in den von dem Schutzüberzug umgrenzten Raum gegriffen werden kann, und/oder dass
b. der Schutzüberzug eine dritte Öffnung aufweist, durch die in den von dem Schutzüberzug umgrenzten Raum gegriffen werden kann, wobei die zweite Öffnung und die dritte Öffnung ausgebildet und derart angeordnet sind, dass ein Benutzer gleichzeitig mit beiden Händen in den von dem Schutzüberzug umgrenzten Raum greifen kann, und/oder dass
c. der Schutzüberzug eine dritte Öffnung mit einem Verschluss aufweist.

12. Schutzüberzug nach einem der Ansprüche 1 bis 11, **dadurch gekennzeichnet, dass**
a. der Schutzüberzug schlauchförmig ausgebildet ist, wobei die erste Öffnung und die zweite an den Schlauchenden angeordnet sind, und/oder dass
b. der Schutzüberzug schlauchförmig ausgebildet ist, wobei die erste Öffnung und die zweite an den Schlauchenden angeordnet sind und wobei die dritte Öffnung in der Schlauchwandung angeordnet ist.

13. Hunderollleinensystem beinhaltend eine Hunderollleine, an der ein Schutzüberzug, insbesondere ein Schutzüberzug nach einem der Ansprüche 1 bis 12, für eine Hand angeordnet ist.

14. Hunderollleinensystem nach Anspruch 13, **dadurch gekennzeichnet, dass**
a. ein Teil der Hunderollleine in einen von dem Schutzüberzug umgrenzten Raum eingeführt ist und ein anderer Teil der Hunderollleine aus dem Schutzüberzug herausragt und/oder dass
b. ein Griff und/oder ein Bedienteil der Hunderollleine in einen von dem Schutzüberzug umgrenzten Raum eingeführt ist und ein anderer Teil der Hunderollleine aus dem Schutzüberzug herausragt, und/oder dass
c. ein Teil eines Gehäuses der Hunderollleine in den von dem Schutzüberzug umgrenzten Raum eingeführt ist und ein anderer Teil des Gehäuses aus dem Schutzüberzug herausragt und/oder dass
d. der Schutzüberzug eine erste Öffnung für eine Hand aufweist und dass die Hunderollleine in der zweiten Öffnung befestigt ist und/oder dass
e. die Hunderolleine zerstörungsfrei und vorzugsweise werkzeugfrei von dem Schutzüberzug lösbar ist und/oder dass
f. die Hunderolleine eine Lampe oder einen Halter für eine Lampe aufweist.
